# EUROPEAN PATENT APPLICATION

(11) **EP 3 556 506 A2**
(43) Date of publication of application: **23.10.2019**
(21) Application number: 19163350.2
(22) Date of filing: 18.03.2019
(51) Int. Cl.: B23K 11/00, B23K 11/06, B23K 11/25, B23K 31/12, B23K 101/06

(54) **A WELDING PROCESS AND WELDING APPARATUS USING A PROBE**

(30) Priority: 18.04.2018 GB 201806323
(71) Applicant: Rolls-Royce plc, London SW1E 6AT (GB)
(72) Inventor: Clark, Daniel, Derby, Derbyshire DE24 8BJ (GB); Wright, David, Derby, Derbyshire DE24 8BJ (GB); Tooley, Steven, Derby, Derbyshire DE24 8BJ (GB)
(74) Representative: Rolls-Royce plc

(57) **Abstract**

A welding apparatus for a workpiece (8), comprises resistance welding electrode wheels (4, 6) which form a weld seam between components (8A, 8B) of the workpiece (8). The formed weld is monitored by an ultrasonic probe which is situated behind the rollers (4, 6) with reference to the weld direction (40). The ultrasonic probe comprises a linear phased array of piezoelectric elements. The probe enables real-time monitoring of the welding process, with the facility to adjust the process to correct deviations.

## Description

This disclosure relates to a welding process and to a welding apparatus for carrying out the welding process. The disclosure relates particularly, although not exclusively, to resistance welding apparatus.

According to a first aspect, the present disclosure provides a welding process comprising:
a) placing a workpiece in a welding position at a welding unit, the workpiece comprising at least two overlapping components;
b) displacing the workpiece relatively to the welding unit in a welding direction;
c) operating the welding unit whereby the components of the workpiece are welded together to form a lap weld as they pass the welding unit;
d) positioning a probe adjacent the path of the weld emerging from the welding unit, and activating the probe to direct an input signal at the weld and to detect an output signal derived from the input signal and modified by features of the weld;
e) processing data from the probe in data capture and processing equipment; and
f) outputting from the data capture and processing equipment a weld parameter signal representing the width of the weld.

The process may include outputting from the data capture and processing equipment a second weld parameter signal representing the centreline position of the weld.

The or each weld parameter signal may be provided to a user interface.

The or each weld parameter signal may be provided to a weld controller, operation of the welding unit being adjusted in response to the or each weld parameter signal.

The probe may be an ultrasonic probe.

The process may be a resistance welding process.

According to a second aspect, the present disclosure provides an apparatus for carrying out a welding process in accordance with the first aspect, the welding apparatus comprising:
i) the welding unit;
ii) a drive arrangement for causing the relative displacement between the welding unit and the workpiece; and
iii) weld monitoring equipment comprising the probe, which is positioned behind the welding unit with respect to the welding direction, and the data capture and processing equipment connected to receive output from the probe.

The welding unit may comprise a pair of oppositely disposed resistance seam welding electrode wheels. In alternative embodiments, the welding unit may be, for example, a laser welding unit.

The probe may comprise a phased array ultrasonic probe unit comprising an array of piezoelectric elements. The array of piezoelectric elements may be a linear array extending transversely of the weld direction.

The ultrasonic probe may be situated in a cavity of a housing having a coupling liquid inlet. The housing may have an open face positioned for at least partial closure by the workpiece. The housing may be configured to be supported on the workpiece by liquid flowing from the cavity through a gap between the housing and the workpiece.

The probe may be provided with support wheels for supporting the probe on the workpiece.

The probe may have an encoding device responsive to relative displacement between the probe and the workpiece.

The encoding device may comprise at least one encoding wheel positioned for rolling contact with the workpiece.

The probe may be fixed in position with respect to the welding unit in the welding direction.

In alternative embodiments, the weld monitoring equipment may, for example, comprise a laser ultrasonic testing (LUT) system.

The distance between the welding unit and the weld monitoring equipment may be not less than 5 mm and not more than 20 mm.

The data capture and processing equipment may be configured to process signals from the probe and to output data to a user interface.

The data capture and processing equipment is configured to process signals from the ultrasonic probe and to output control signals to a weld controller for the welding unit.

By providing the weld monitoring equipment as part of the welding apparatus, it is possible to assess the weld as it is being formed by the welding unit, enabling adjustments to be made to the operation of the welding unit during the course of the welding process if the weld characteristics deviate from predetermined parameters.

According to a third aspect, the present disclosure provides a method of modifying existing welding apparatus comprising:
i. a welding unit; and
ii. a drive arrangement for causing relative displacement between the welding unit and the workpiece in a welding direction,
the method comprising installing weld monitoring equipment comprising a probe, which is positioned behind the welding unit with respect to the welding direction, and data capture and processing equipment connected to receive output from the probe, thereby to form welding apparatus in accordance with the second aspect.

Arrangements will now be described, by way of example, with reference to the accompanying drawings, in which:
Figure 1 is a schematic view of resistance welding apparatus;
Figure 2 is a view in the direction of the arrow II in Figure 1;
Figure 3 is a sectional view of an ultrasonic probe of the apparatus of Figures 1 and 2;
Figure 4 is a representation of a screen display generated by the ultrasonic probe of Figure 3;
Figure 5 is a schematic representation of another screen display; and
Figure 6 is a flowchart representing a resistance welding process carried out using the apparatus of Figures 1 to 3.

Resistance welding processes are well known, and may take a variety of forms. The description below refers to a seam welding process using electrodes in the form of conductive electrode wheels which sit on opposite sides of a workpiece to be welded. In some such processes, the wheels make direct contact with the workpiece, but in others at least one of the electrode wheels is grooved so that a shaped copper wire can be introduced between the wheel and the workpiece. In other resistance welding processes, different forms of electrode are used. Also, other forms of welding are known, such as laser welding. It will be appreciated that the seam welding process described below can be replaced by alternative welding processes.

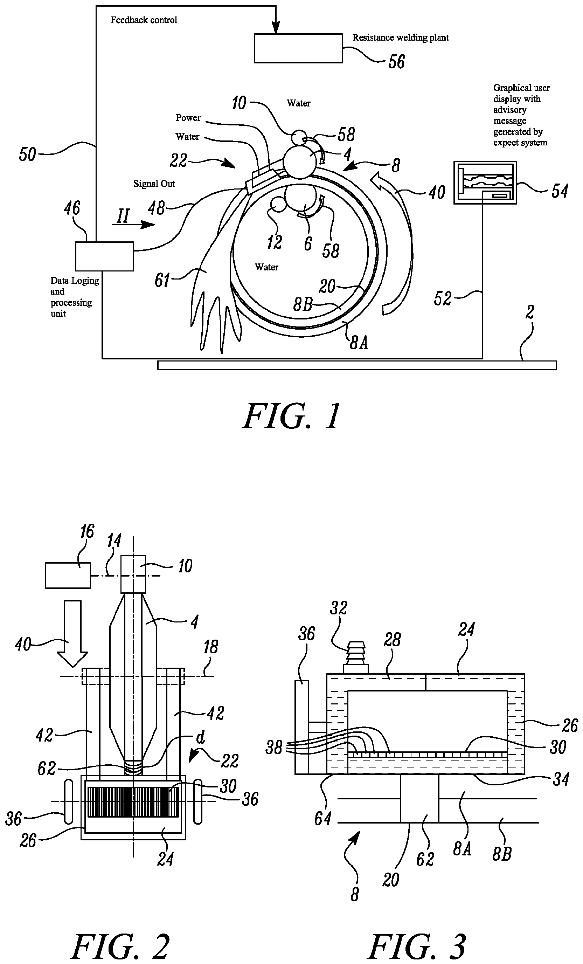

The apparatus shown in Figures 1 to 3 comprises a supporting structure which is not shown in detail in the Figures, but is represented by a catch tray and operator standing area 2. A welding unit, comprising a pair of resistance welding electrode wheels 4, 6, is supported on the structure 2. In operation, as shown in Figure 1, a workpiece 8 is positioned between the wheels 4, 6. The wheels 4, 6 are mounted on the support structure 2 for rotation about axes 18 (see Figure 2) and in a manner which enables them to apply high pressure to the workpiece 8.

Drive wheels 10, 12 engage the peripheries of the respective electrode wheels 4, 6. The drive wheel 10 is shown in Figure 2, and is supported on the supporting structure 2 for rotation about its axis 14. A motor 16 provided on the supporting structure 2 can be actuated to drive the drive wheel 10 about its axis 14, thereby also driving the electric wheel 4 in rotation about its axis 18. A similar mounting and driving arrangement is provided for the other knurled drive wheel 12, and the drive wheels 10, 12 and their motors 16 thus constitute a drive arrangement for the electrode wheels 4, 6. It will be appreciated that other forms of drive arrangement are possible, for example the electrode wheels 4, 6 may be directly driven about their respective axes 18 by motors carried by the support structure 2, without the intermediary of the knurled wheels 10, 12.

As shown in Figure 1, the workpiece 8 is in the form of a large-diameter housing, for example a housing section made from an aluminium alloy for a gas turbine engine. The workpiece 8 comprises 2 components 8A, 8B to be welded together along a weld line 20. In the embodiment shown in the Figures, the components 8A and 8B overlap each other so that the eventual weld will be a lap weld.

The apparatus shown in Figures 1 and 2 is provided with weld monitoring equipment 22 which includes an ultrasonic probe 24. As shown in Figure 3, the ultrasonic probe 24 comprises a housing 26 defining a cavity 28 within which a probe unit 30 is situated. The housing 26 has an inlet 32 connected to a water supply line (not shown) so that the cavity 28 can be supplied with water under pressure, the water serving as an ultrasonic coupling liquid. The housing 26 has an open face 34 which is shown in Figure 3 as being directed towards the workpiece 8.

The probe 24 is provided with encoding wheels 36 (only one of which I shown in Figure 3) which are in rolling contact with the upper surface of the workpiece 8 as shown in Figure 3.

The probe unit 30 is a phased array probe unit comprising a plurality of individual piezoelectric elements 38 which are disposed in a linear array extending transversely of the weld line 20 and of sufficient length to extend on both sides beyond the weld line 20 itself.

The ultrasonic probe 24 is carried by the supporting structure 2 so that it maintains a fixed position behind the welding unit, with respect to a welding direction 40, as shown in Figure 2. In the embodiment shown in Figure 2, the ultrasonic probe 24 is carried by a pair of arms 42 which extend from a hub 44 of the electrode wheel 4. The spacing d between the electrode wheel 4 and the ultrasonic probe 24 remains constant and may, for example, be not less than 5 mm and not more than 20 mm.

The weld monitoring equipment 22 also comprises a data logging and processing unit 46 and a graphical user interface in the form of a screen 54. The data logging and processing unit 46 is in communication, for example by wiring 48 and 52, with the ultrasonic probe 24 and the screen 54. The data logging and processing unit 46 is also connected, as indicated at 50, with a weld controller 56, which controls inputs to the electrode wheels 4, 6.

For operation, the components 8A and 8B are positioned between the electrode wheels 4, 6, which may be moved apart for this purpose. The components 8A and 8B are positioned together, possibly with the aid of suitable clamps or jigs, so that they overlap in the regions to be welded. The electrode wheels 4, 6 are then brought towards each other to clamp the overlapping regions of the components 8A and 8B under high pressure. For example, one of the electrode wheels 4, 6 may be mounted displaceably on the supporting structure 2 so that it can be moved under power towards the other of the electrode wheels 4, 6.

The electrode wheels 4, 6 are then rotated in opposite directions, as indicated by arrows in Figure 1 by the knurled drive wheels 10, 12, so causing the workpiece 8 to be driven in the direction 40. Welding current is then applied to the electrode wheels 4, 6 and welding begins along the weld line 20. As indicated in Figure 2, this results in a lap or seam weld 62 being created as the workpiece travels between the electrode wheels 4, 6. Control of the feed direction of the workpiece 8 may be achieved manually by an operator, who guides the workpiece as it travels between the electrode wheels 4, 6 in order to maintain the desired path of the weld 62.

The ultrasonic probe 24 is positioned closely behind the wheel 4, and consequently the newly-formed weld 62 passes beneath it shortly after it is formed. Water supplied under pressure through the inlet 32 enters the cavity 28 and is discharged at the open face 34, passing through a gap 64 formed between the housing 26 and the upper face (as shown in Figure 3) of the workpiece 8. The gap 64 thus serves as a hydraulic support for the ultrasonic probe 24, maintaining a friction-free relationship between the ultrasonic probe 24 and the workpiece 8. It will be appreciated from Figure 3 that the linear phased array of the probe unit 30 is coupled to the upper surface of the workpiece 8 by the water in the region of the cavity 28 between the probe unit 30 and the workpiece 8. Water emerging from the cavity 28 flows to the catch tray 2 along with coolant (e.g. water) fed to the electrode wheels 4, 6 and adjacent region of the workpiece 8, as indicated at 61. In some embodiments, adequate ultrasonic coupling can be achieved using only the coolant flow to the electrode wheels 4, 6, in which case a separate supply of water through the inlet 32 is not required.

The probe unit 30 is controlled to emit an input signal in the form of a series of ultrasonic pulses from the individual piezoelectric elements 38 in a predetermined time sequence. Each pulse propagates through the water layer within the cavity 28, into the material of the workpiece 8 and the formed weld 62. The pulses are reflected from features of the components 8A and 8B that they encounter, and in particular the various surfaces and transitions of the components 8A and 8B, and the returning reflected pulses, constituting an output signal derived from the input signal but modified by the features of the components 8A and 8B, are captured by the elements 38. In addition, the encoding wheels 36 provide signals representing the position of the workpiece 8, in order that the signals from the probe unit 30 can be correlated with the position along the weld 62.

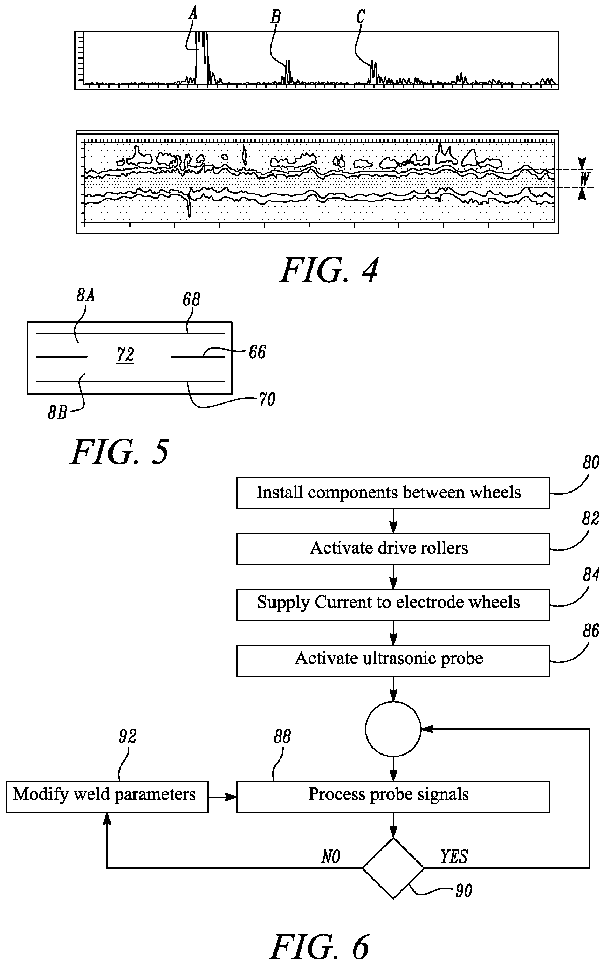

The resulting signals are sent to the data logging and processing unit 46, which analyses the signals and provides an output to the screen 54. The screen 54 can display a variety of images representing parameters and other characteristics of the weld 62. An example of such images is shown in Figure 4, in which the upper trace is an A-scan representation in which signal strength is shown along the X-axis and elapsed time along the Y-axis. Thus, peaks A, B and C indicate signals reflected respectively from the upper surface of the component 8A, from the interface between the components 8A and 8B, and from the lower surface of the component 8B.

The lower image in Figure 4 is a C-scan representing the weld path and the weld width *w* of the formed weld 62, in which the X-axis represents the transverse direction across the weld 62, and the Y-axis represents the position along the weld 62 as determined by the signals generated by the encoding wheels 36. This image thus shows the width of the weld *w as* well as its position across the weld direction 40.

Figure 5 schematically represents a B-scan image, in which workpiece 8 depth is plotted on the X-axis, and the width across the weld 62 is plotted on the Y-axis. Figure 5 shows the un-welded interface 66 between the components 8A and 8B, as well as the upper and lower surfaces 68, 70 of the workpiece 8. The interface 66 is interrupted at the weld zone 72 where the material of the components 8A and 8B has fused together.

The images of Figure 4 can be monitored in real time by an operator to ensure that the welding process is proceeding properly. If necessary, the operator can intervene to adjust the welding process in order to correct any abnormalities. For example, by monitoring the weld centerline position as indicated by the lower image of Figure 4, the operator can obtain early warning of a possible misalignment, and can correct the path of the workpiece before the misalignment falls outside permitted deviations. Also, the apparatus can be a helpful training aid, by giving a visual indication to a trainee operator of the progress of the welding operation.

Also, automatic intervention can be achieved as a result of the data logging and processing unit providing feedback signals to the weld controller 56. For example, if the output from the data logging and processing unit 46 indicates that the width of the weld 62 has decreased towards a lower limit value, the weld controller 56 may adjust various parameters of the welding operation, for example the pressure applied by the electrode wheels 4, 6, their speed of rotation (and hence the relative travel speed of the workpiece 8 past the electrode wheels 4, 6), or the welding current supplied to the electrode wheels, in order to maintain the width within acceptable limits. The probe 24 thus enables real-time monitoring of the welding process, with the facility to adjust the process, either manually or automatically, to correct deviations.

A practical embodiment of welding apparatus as shown in Figures 1 to 3 has the following features:
number of piezoelectric elements 38 in the linear phased array 30: 120
length of linear phased array 30: 20 mm
width of weld 62: 5-7 mm
thickness of components 8A, 8B: 0.6 to 3.2 mm
width of electrode wheels 4, 6 at point of contact: 8 mm
diameter of electrode wheels 4, 6: approximately 300 mm
feed rate: 25-50 mm/minute
stand-off of ultrasonic probe 24 from electrode wheel 4: 5-20 mm

Figure 6 is a summary flow chart representing the process described above. At step 80, the workpiece 8 comprising the two components 8A and 8B is clamped between the electrode wheels 4, 6. Subsequently, at step 82, the drive arrangement comprising the drive rollers 10, 12 is activated to displace the workpiece 8 in the welding direction 40 through the electrode wheels 4, 6.

At step 84, welding current is supplied to the electrode wheels 4, 6, to fuse the material of the components 8A, 8B causing them to become welded together as they pass between the electrode wheels 4, 6. At step 86, the ultrasonic probe 24 is activated to emit ultrasonic pulses into the workpiece 8 and to receive reflected pulses as signals which are transmitted to the data logging and processing unit 46. At step 88, the signals from the ultrasonic probe 24 are processed in the data logging and processing unit 46 to produce output data which, at step 90, is compared with reference data to determine whether or not the welding process is proceeding in accordance with requirements. If the output at step 90 is "YES" the process returns to step 88 without any modification of the welding parameters. However, if the output from 90 is "NO", the process proceeds to step 92 at which modifications to the welding parameters are made by way of the weld controller 56 in order to bring the process into line with predetermined requirements.

It will be appreciated that, although the present disclosure describes the welding of a large-diameter workpiece 8, the process can be adapted to other forms of workpiece, for example bellows, flexible seals, smaller components of cylindrical form such as food cans, and automotive components.

Although the probe 24 is shown supported on the workpiece 8 by means of the water from the cavity 28 flowing through the gap 64, it could be supported by other means, for example by a tracking wheel or set of rollers.

It will be appreciated that the screen or other graphical user interface 54 need not be situated in the immediate vicinity of the remainder of the welding apparatus. Instead, the screen 54 could be situated remotely, with the facility for the operator to monitor progress of the welding operation, and to provide input to the weld controller 56, from the remote location.

It will be appreciated that the monitoring unit 22 can easily be detached from the rest of the welding apparatus if it is not required for a particular welding operation. Similarly, the monitoring unit 22, being a self-contained unit, could be retrofitted to an existing welding installation.

In cases where a weld line follows a complex path, measures may need to be taken to ensure that the monitoring unit 22 follows the line of the weld 62 accurately, without cutting corners as it follows the path of the wheels 4, 6. Accurate following of the line of the weld 62 is assisted by minimising the distance d at which the monitoring unit22 follows the wheels 4, 6.

Although the description above refers to the probe unit 30 as an ultrasonic device, other forms of monitoring are possible. For example, the weld characteristics could be monitored using X-rays, or by assessing heat transfer rates across the components 8A and 8B.

In the arrangement described above with reference to the drawings, the welding unit is a resistance welding unit utilizing the electrode wheels 4, 6. In other embodiments, the welding unit may be a laser welding unit. Laser welding processes do not employ a coolant such as water. A trailing monitoring system using weld monitoring equipment 22 which includes an ultrasonic probe 24 could nevertheless be employed provided that the workpiece 8 is kept dry local to the beam impingement position. Alternatively an LUT (laser ultrasonic testing) system can be used, in which a pulsed laser (separate from the welding laser) is directed at the weld 62. The pulsed laser ablates the surface of the workpiece 8 to a minimal depth. The shockwave from the ablation provides a sonic source which is then picked up by another laser serving as a detection laser. The surface of the workpiece 8 is scanned as a transverse array of inspection events (analogous to the piezo-electric system used for the resistance welding as described above). Laser welds are typically narrower than resistance welds, so the inspection width and spacing would scale accordingly. Significantly, laser welding has more of a risk of joint separation in a lap condition as there is no direct pressure through the weld 62 at the point of welding as there is for resistance welding.

As an alternative to weld monitoring using laser ablation, a system using laser heating, without ablation, could be employed.

## Claims

1. A welding process comprising:
a) placing a workpiece (8) in a welding position at a welding unit (4, 6), the workpiece (8) comprising at least two overlapping components (8A, 8B);
b) displacing the workpiece (8) relatively to the welding unit (4, 6) in a welding direction (40);
c) operating the welding unit (4, 6) whereby the components (8A, 8B) of the workpiece (8) are welded together to form a lap weld (62) as they pass the welding unit (4, 6);
d) positioning a probe (24) adjacent the path of the weld (62) emerging from the welding unit (4, 6), and activating the probe (24) to direct an input signal at the weld (62) and to detect an output signal derived from the input signal and modified by features of the weld (62);
e) processing data from the probe (24) in data capture and processing equipment (46); and
f) outputting from the data capture and processing equipment (46) a weld parameter signal representing the width (w) of the weld (62).

2. The welding process as claimed in Claim 1, which includes outputting from the data capture and processing equipment (46) a second weld parameter signal representing the centreline position of the weld (62).

3. The welding process as claimed in Claim 1 or Claim 2, in which the or each weld parameter signal is provided to a user interface (54).

4. The welding process as claimed in any one of the preceding claims, in which the or each weld parameter signal is provided to a weld controller (56), operation of the welding unit (4, 6) being adjusted in response to the or each weld parameter signal.

5. The welding process as claimed in any one of the preceding claims, in which the probe (24) is an ultrasonic probe.

6. Welding apparatus for carrying out a welding process in accordance with any one of the preceding claims, the welding apparatus comprising:
i) the welding unit (4, 6);
ii) a drive arrangement (10, 12, 16) for causing the relative displacement between the welding unit (4, 6) and the workpiece (8); and
iii) weld monitoring equipment (22) comprising the probe (24), which is positioned behind the welding unit (4, 6) with respect to the welding direction (40), and the data capture and processing equipment (46) connected to receive output from the probe (24).

7. Welding apparatus as claimed in Claim 6, in which the probe (24) comprises a phased array ultrasonic probe unit (30) comprising an array of piezoelectric elements (38).

8. Welding apparatus as claimed in Claim 7, in which the array of piezoelectric elements (38) is a linear array extending transversely of the weld direction (40).

9. Welding apparatus as claimed in Claim 7 or Claim 8, in which the ultrasonic probe (24) is situated in a cavity (28) of a housing (26) having a coupling liquid inlet (32).

10. Welding apparatus as claimed in Claim 9, in which the housing (26) has an open face (34) positioned for least partial closure by the workpiece (8).

11. Welding apparatus as claimed in Claim 10, in which the housing (26) is configured to be supported on the workpiece (8) by liquid flowing from the cavity (28) through a gap (64) between the housing (26) and the workpiece (8).

12. Welding apparatus as claimed in any one of Claims 6 to 11, in which the probe (24) is provided with support wheels for supporting the probe (24) on the workpiece (8).

13. Welding apparatus as claimed in any one of Claims 6 to 12, in which the probe (24) has an encoding device (36) responsive to relative displacement between the probe (24) and the workpiece (8).

14. Welding apparatus as claimed in Claim 13, in which the encoding device (36) comprises at least one encoding wheel positioned for rolling contact with the workpiece (8).

15. Welding apparatus as claimed in any one of Claims 6 to 14, in which the probe (24) is fixed in position with respect to the welding unit (4, 6) in the welding direction (40).
